# EUROPEAN PATENT SPECIFICATION

(11) **EP 2 035 316 B1**
(45) Date of publication and mention of the grant of the patent: **15.12.2010**
(21) Application number: 07785721.7
(22) Date of filing: 27.06.2007
(51) Int. Cl.: B66C 1/66, F03D 11/04, F16B 5/02, F03D 1/00

(54) **LIFTING EQUIPMENT FOR HANDLING A WIND TURBINE COMPONENT AND A METHOD FOR HANDLING A WIND TURBINE COMPONENT**
HUBEINRICHTUNG ZUR HANDHABUNG EINER WINDTURBINENKOMPONENTE UND VERFAHREN ZUR HANDHABUNG EINER WINDTURBINENKOMPONENTE
ÉQUIPEMENT ÉLÉVATEUR POUR MANIPULER UN COMPOSANT D'ÉOLIENNE ET PROCÉDÉ DE MANIPULATION D'UN COMPOSANT D'ÉOLIENNE

(30) Priority: 30.06.2006 DK 200600893
(43) Date of publication of application: 18.03.2009
(73) Proprietor: Vestas Wind Systems A/S, 8940 Randers - SV (DK)
(72) Inventor: PEDERSEN, Gunnar Kamp Storgaard, 6900 Skjern (DK)
(74) Representative: Schmidt, Jens Joergen
(86) International application number: PCT/DK2007/000313
(87) International publication number: WO 2008/000262

(56) References cited:
- EP-A2- 1 057 770
- WO-A-02/04321
- WO-A-03/100178
- US-A- 3 006 443
- US-A- 3 686 877
- US-A- 5 207 468
- US-A- 5 653 556

## Description

### Background of the invention

The invention relates to lifting equipment for handling a wind turbine component and a method for handling a wind turbine component.

### Description of the related art

Transportation and lifting of the different sections of a wind turbine is always a challenge and especially wind towers or tower segments are quite unmanageable. The shape and dimensions of the units vary from unit to unit e.g. because of the conical shape of wind towers.

Usually the tower segments of a wind turbine are mounted with lifting equipment at the tower flanges.

EP patent no. EP-B 1 303 447 discloses an example of a known lifting system wherein an outline of a gripping device for a wind turbine tower segment. The gripping device can be fastened to the tower segment in a certain position on the flanges, by screw connections through holes adapted to said flanges. The holes in the gripping device are arranged according to the holes in the flanges of the tower section.

A problem with the solution of the above mentioned EP-patent is that due to the unlike attachment points on the different segments, different unique gripping devices has to be produced and used when erecting a wind turbine. Consequently the erection process will be prolonged and more expensive than necessary.

Another example of a known lifting system to be regarded as closest prior art is disclosed in EP 1 057 770.

An object of the present invention is to describe a lifting device without the mentioned disadvantages and especially does not involve changing operations of lifting equipment during erection of a wind turbine.

### The invention

The invention provides lifting equipment for handling wind turbine components in connection with lifting means, said lifting equipment comprising
- a base frame with at least one attachment area, and
- at least two attachment points for said wind turbine component
where at least one of said attachment points are adjustable mounted in relation to said base frame.

Hereby it is ensured that the lifting equipment can be adapted and used with a plurality of different wind turbine components where the distance and relative angle between attachment points of the components vary.

In one aspect of the invention said wind turbine component is a wind turbine tower segment. Hereby it is ensured that one lifting equipment can be used with any of said tower segments including the lower segments with larger diameters and the upper segments with smaller diameters e.g. when erecting a conical wind turbine tower. Furthermore the same lifting equipment can be used when handling the different segments in connection with manufacturing and transportation.

The preferred attachment points of wind turbine tower segments are the connection holes of any flange of the segments.

In another aspect of the invention at least one of said attachment points comprises at least one sleeve with a through going hole which centre is dislocated from the centre of said sleeve in order to perform an eccentric movement within the area of a hole in said base frame. It is hereby ensured that the distance and angle between at least two attachment points of the lifting equipment can be adjusted to desired positions i.e. the sleeve hole may be positioned at a desired position within the area of the hole of the base frame.

In another aspect of the invention the base frame comprises at least one through going hole, the area of said through going hole in the base frame being substantially larger than the area of said hole in at least one sleeve e.g. at least twice in size in relation to a hole in said at least one sleeve. Hereby it is possible to achieve a high degree of freedom to place the hole of the sleeve anywhere within the area of the hole of the base frame.

In another aspect of the invention the number of sleeves is two, first and second sleeve, which are partly or totally integrated into each other or into the base frame e.g. in depressed areas of the base frame and sleeve, respectively. By integrating the sleeves into each other an enhanced stability can be ensured. Further by entering locking means thru the sleeves and base frame at the integration areas it is possible in an embodiment to lock them to each other e.g. during transportation, positioning etc.

In a further aspect of the invention said first sleeve is located in a depressed area of said base frame and a second sleeve is located in a depressed area of said first sleeve opposite to the base frame. Hereby it is achieved a higher stability in especially a perpendicular direction in relation to the attachment of the wind turbine component.

In an even further aspect of the invention the eccentric movement between the holes in said two sleeves and the eccentric movement between the hole in the first sleeve and the hole in the base frame allows a double eccentric movement of the hole in the second sleeve in relation to the base frame. It is hereby ensured that it is possible to place the hole in the second sleeve over any desired position within the area of the hole in the base frame which gives the maximum flexibility of the invented lifting equipment.

In another aspect of the invention said first sleeve comprises a through going hole with a diameter larger than the diameter of the hole in said second sleeve and said base frame comprises a through going hole with a diameter larger than the diameter of the hole in said first sleeve. Hereby is an advantageous embodiment of the invention achieved.

In another aspect of the invention at least a further attachment point comprises a mounted strut in relation to the base frame. It is hereby ensured that shear stress between the wind turbine component and the invented lifting equipment especially during the initial lifting can be handled by a non-movable part of the lifting tool. Furthermore when placing the invented lifting equipment on its location of operation e.g. on the flange of a wind turbine tower section, the steering of the lifting equipment is eased by using the fixed mounted strut as a guard-pin.

In another aspect of the invention said strut in relation to the base frame is replaceable e.g. to a strut with another diameter and/or length and/or shape such as triangular or circular. Hereby it is ensured that an optimal elaborated strut can be used and adapted to the invented lifting equipment dependent of e.g. the elaboration of the attachment point or attachment area.

In another aspect of the invention the lifting equipment comprises an area for handling, such as when fixing said lifting equipment to a wind tower component.

Hereby it is ensured that a crane or similar lifting means can be used e.g. when placing the invented lifting equipment on its location of operation and thus ensuring that the operating people are not required to lift the equipment to the location manually.

In another aspect of the invention said base frame comprises an area for connecting said lifting means e.g. a hole for attaching a crane wire and hook. Hereby it is ensured that a crane or similar lifting means can advantageously be used after placing the invented lifting equipment on its location of operation.

The invention also provides a method for handling a wind turbine component, said method comprising steps of
- attaching lifting equipment according to any of claim 1 to 12 to said wind turbine component,
- connecting lifting means to said lifting equipment, and
- handling the wind turbine component to a desired position.

Hereby is an advantageous method to be used with the lifting equipment achieved.

### Figures

The invention will be described in the following with reference to the figures in which
- fig. 1: illustrates a large modem wind turbine as seen from the front,
- fig. 2a: illustrates a conventional lifting equipment attached to a wind turbine tower segment,
- Fig 2b: illustrates an exploded view of a conventional lifting equipment attached to a wind turbine tower segment,
- fig. 3: illustrates schematically a section of a wind turbine component,
- fig. 4a: illustrates a three-dimensional view of one embodiment of the universal lifting tool according to the invention,
- fig. 4b: illustrates a first side view of one embodiment of the universal lifting tool according to the invention,
- fig. 4c: illustrates a first cross sectional view of the universal lifting tool according to one embodiment of the invention,
- fig. 4d: illustrates a second side view of one embodiment of the universal lifting tool according to one embodiment of the invention,
- fig. 5: illustrates a second cross sectional view of the universal lifting tool according to one embodiment of the invention,
- fig. 6a: illustrates schematically a three-dimensional view of a preferred embodiment of the invented universal lifting tool according to the present invention,
- fig. 6b: illustrates schematically a first side view of a preferred embodiment of the invention,
- fig. 6c: illustrates schematically a second view of a preferred embodiment of the invention,
- fig. 7a: illustrates schematically the invented universal lifting tool when attached to a wind turbine tower segment with a first radius,
- fig. 7b: illustrates schematically the unive rsal lifting tool according to the invention when attached to a wind turbine tower segment with a second radius,
- fig. 8: illustrates schematically an explored view of a preferred embodiment of the present invention attached to a wind turbine segment, and
- fig. 9: illustrates schematically a view of a preferred embodiment of the present invention attached to and lifting a wind turbine tower segment.

### Detailed description

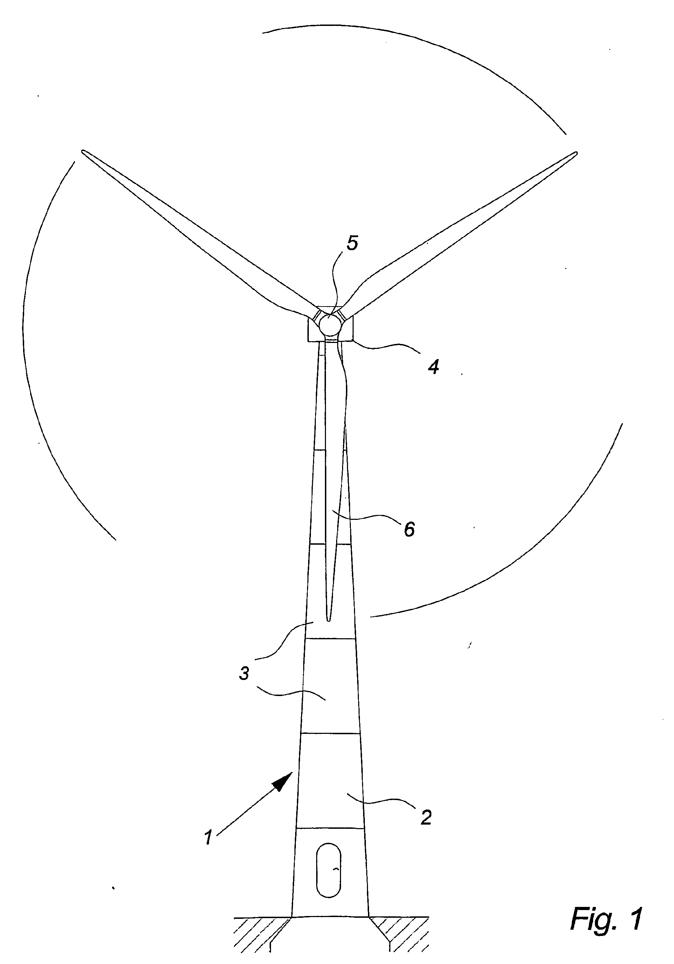

Fig. 1 illustrates a modem wind turbine 1, comprising a tower 2 and a wind turbine nacelle 4 positioned on top of the tower 2. The tower 2 is build up of a plurality of tower segments 3. The wind turbine rotor 5, comprising three wind turbine blades 6, is connected to the nacelle 4 through the low speed shaft which extends out of the nacelle 4 front.

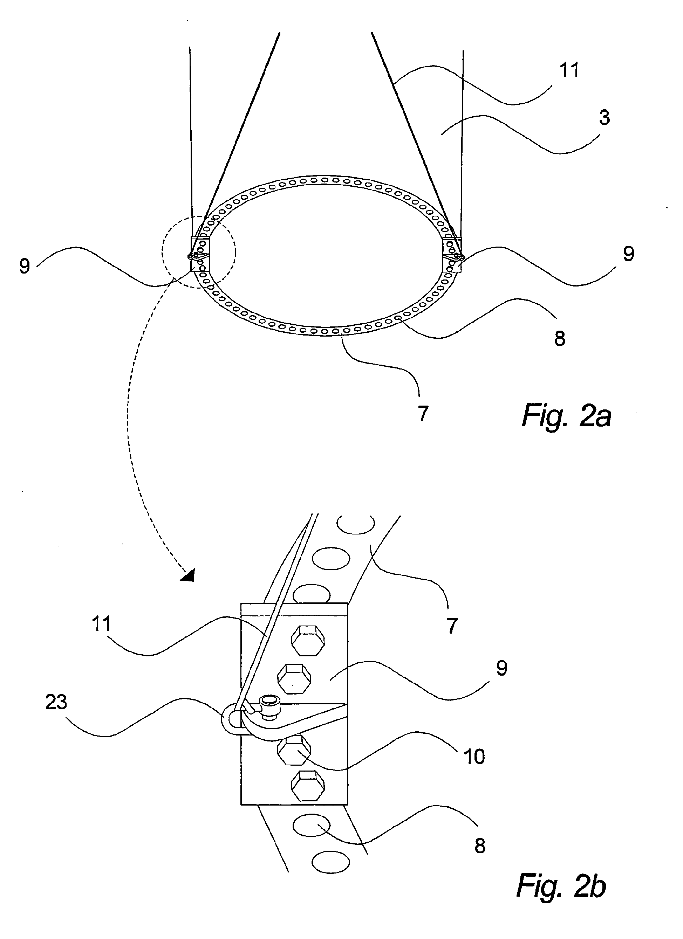

Fig. 2a illustrates schematically one tower segment 3 with flanges 7. Said flanges are constructed with a number of substantially equally spaced holes or connection points 8 around its centreline which is used for attaching the tower segments 3 when the tower 2 is erected.

Besides for used in the purpose of attaching the tower segments to each other, the connection points 8 are often used as attachment points for lifting tool 9 during manufacturing, transportation and installation. As an example when erecting a wind turbine tower 2, lifting tool 9 can be attached to e.g. 2, 4 or 8 locations distributed around the flange 7.

During installation and erection of a wind turbine tower 2 said plurality of different tower segments 3 must be placed on top of each other or on top of a foundation and be securely attached at said attachment points.

The process of erecting a wind turbine tower comprises steps of
- attaching lifting tool 9, 12 to one or more locations around the flange 7,
- attaching lifting means to said lifting tool 9, 12,
- a first sequence of lifting the tower section 3 from the ground. In this sequence the forces acting between the tower section 3 and the lifting tool 9, 12 changes from being primarily shear forces (when the tower section 3 is in substantially horizontal position) to primarily tension forces (when the tower section 3 is free of the ground and is in substantially vertical position),
- a second sequence of positioning the tower section 3 to its installation position on top of a foundation or an other tower section 3, and
- a third sequence of attaching and securing the tower section 3.

Fig. 2b illustrates an exploted view of one embodiment of the prior art of a conventional lifting tool 9 connected to said attachment points 8 during e.g. installation. The lifting tool comprises a base frame including an eyelet for the purpose of attaching e.g. a shackle 23 connected to lifting means (e.g. a crane) thru a wire 11.

During lifting the clamping bolts 10 are exposed to the gravitational forces of the tower via sheer and tension and must be dimensioned to comply with this.

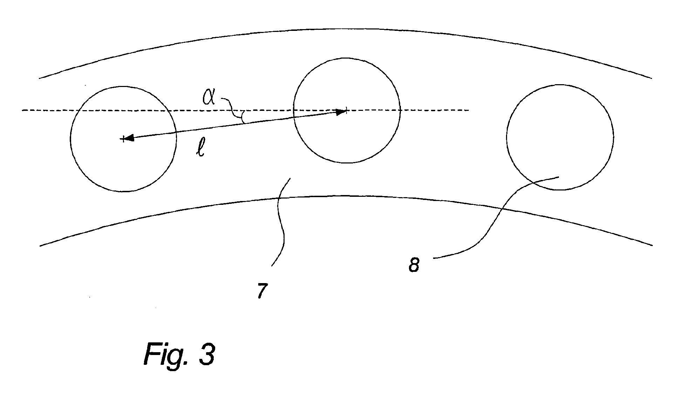

Fig. 3 illustrates an origin to a problem with prior art. Dependent on the construction of e.g. the flanges 7 of a wind turbine tower segment 3, the distance ℓ between the attachment points 8 and the angle α relative to horizontal may vary. This means that a lifting tool with fixed attachment points can only be attached to a component with attachment points distributed in a similar way. As e.g. the ends of wind turbine tower segments may have different radius and may have a variable number of attachment points, said ℓ and α may vary in relation to the different tower segments. For the purpose of lifting, a different set of lifting equipment may therefore be required for each tower section.

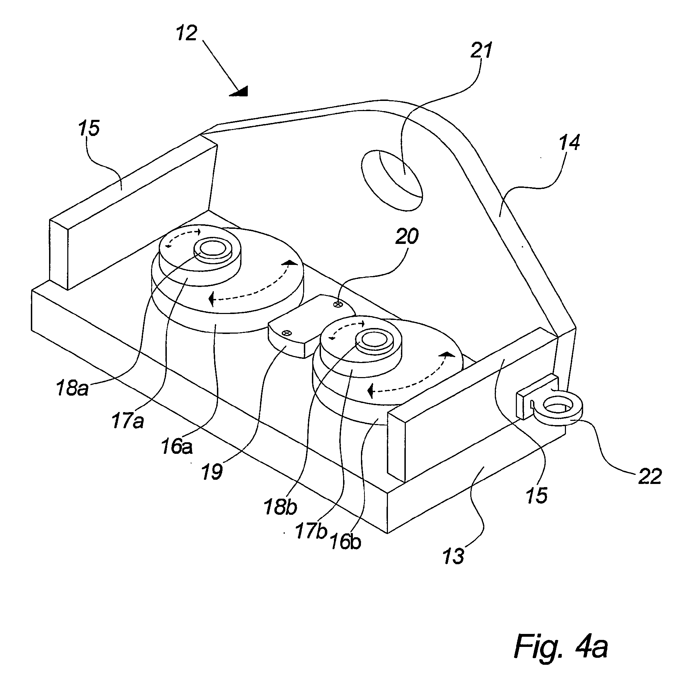

Fig. 4a illustrates a three-dimensional view of a universal lifting tool 12 according to one embodiment of the present invention.

For this embodiment the universal lifting tool 12 comprises a base plate 13, a lifting plate 14 and two side plates 15 which in total constitute a base frame for the invented universal lifting tool.

The lifting plate 14 comprise an eyelet 21 for the attachment of tower lifting means e.g. via a shackle 23.

One of the side plates 15 comprise an eyelet 22 for the attachment of tool lifting means to be used when the invented universal lifting tool 12 is to be manoeuvred to its operating position.

In one embodiment the invented universal lifting tool 12 is to be attached to three attachment points e.g. 8 of a flange 7 of a wind turbine tower section 3.

A middle attachment point comprises a strut 19 that penetrates the base plate 13 and is fastened to the base plate such as with two screws 20. The strut can be replaced dependent on the diameter of the connection points 8 and can be e.g. 30 mm, 36 mm, 42 mm or 48 mm in diameter.

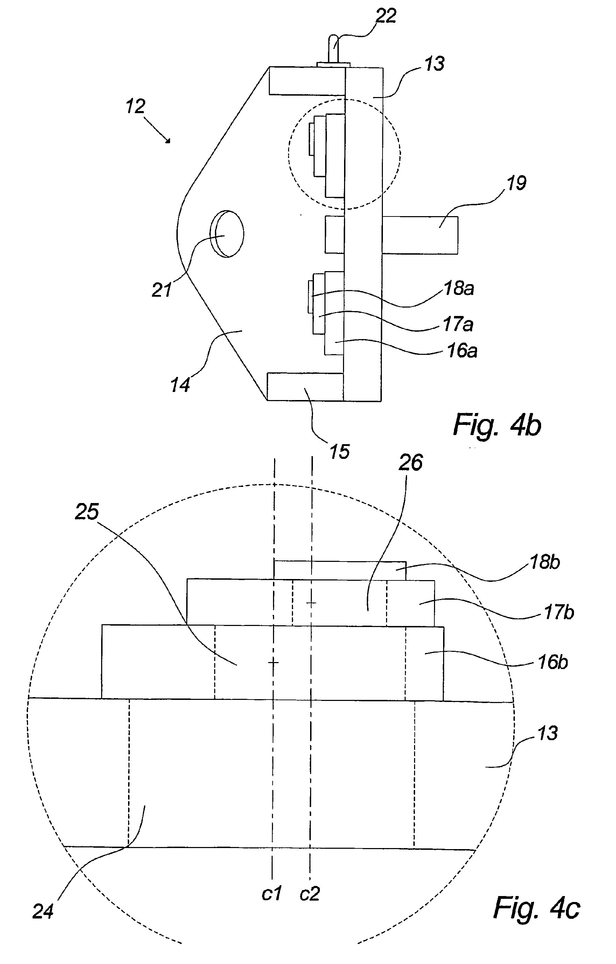

Fig. 4b illustrates a first side view of the invented universal lifting tool according to one embodiment and illustrates the strut 19 penetrating the base plate 13.

One function of the strut 19 is to carry shear forces between the universal lifting tool 12 and the flanges 7 during said first sequence of lifting at said process of erecting a wind turbine tower 2.

Fig. 4a further illustrates that the two distal connection points of this embodiment 12 each comprises sleeves 16, 17 and a bush 18 located on top of each other.

A first sleeve 16 is formed with a substantially circular hole 25 dislocated from the centre point of said first sleeve 16. Said first sleeve 16 can rotate around its centre point as indicated by the dashed arrows.

A second sleeve 17 is also formed with a circular hole 26 into which the bush 18 fits. The centre of said hole 26 is dislocated from the centre point of said second sleeve 17. Said second sleeve can rotate around its centre point as indicated by the dashed arrows.

The diameter of said hole 25 in said first sleeve 16 exceeds the diameter of said hole 26 in said second sleeve 17.

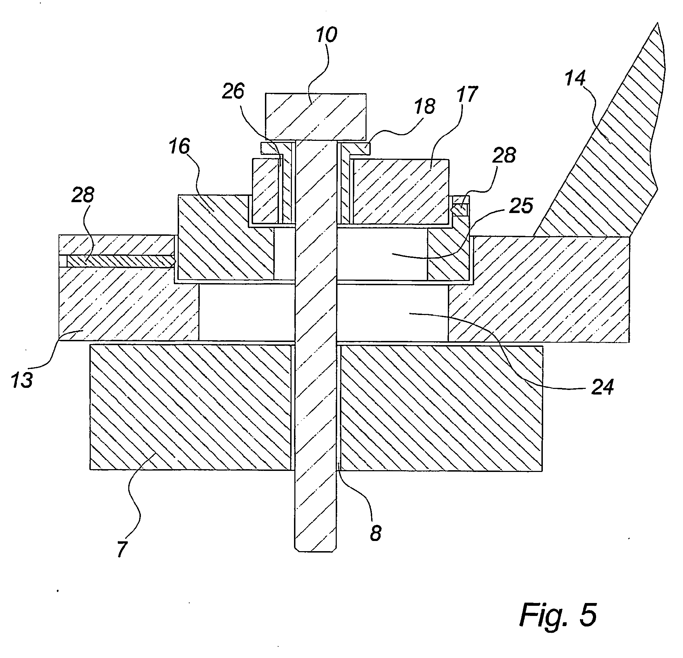

For the described embodiment of the invention, the base plate 13 is formed with a circular hole 24 for each distal attachment point (shown on fig. 5). The diameter of said hole 24 exceeds the diameter of said hole 25 of the second sleeve 16.

By placing the first 16 and second 17 sleeve on the base plate 13 as illustrated in fig. 4a, and furthermore rotating them in relation to each other, it is possible to bring said hole 26 in the second sleeve 17 in position within the area of said hole 24 in the base plate 13 as desired with the positive result, that the distance ℓ and the angle α relative to the fixed attachment point embodied by the strut 19, can be changed to desired.

It is hereby achieved that one lifting equipment 12 can be adapted to the connection points 8 of any tower section 3 despite of the angle α and distance ℓ between the points 8.

This is further illustrated in fig. 4c where an exploded view of the attachment point 16b-18b, 13 of one embodiment of the lifting tool 12 is shown. It is illustrated that the holes 25, 26 in said first and second sleeve 16b, 17b respectively is dislocated from their centrelines c1, c2 and that dependent on the rotation of the sleeves 16b, 17b in relation to the base frame 13, the hole 26 in the second sleeve 17 can be brought in position within the area of said hole 24.

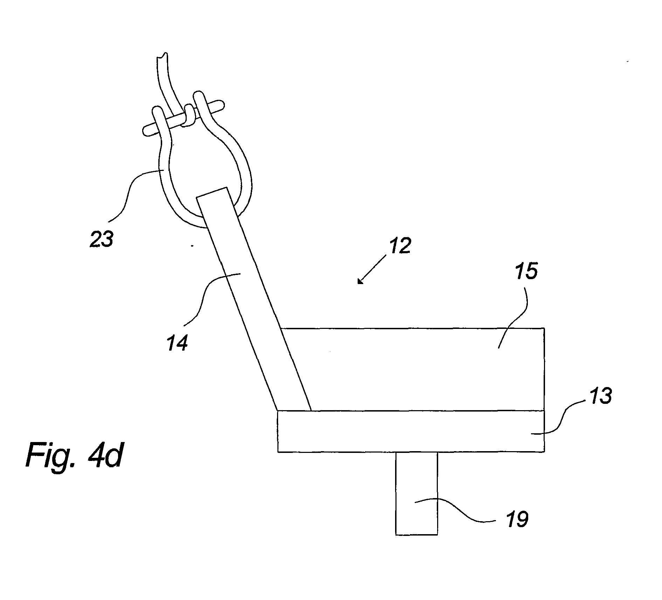

Fig. 4d illustrates a second side view of one embodiment of the invented lifting equipment. It is illustrated that the angle between the lifting plate 14 and the base plate 13 may be different from 90 degrees.

Fig. 5 illustrates a cross sectional view of one embodiment of the invented lifting equipment comprising a base plate 13, a first sleeve 16, a second sleeve 17 and a bush 18.

In one embodiment the first sleeve 16 can be countersunk and fitted in the base plate 13. For said embodiment a pointed screw 28 is used for the purpose of keeping said first sleeve 16 positioned during manouvering of the lifting equipment.

In another embodiment the second sleeve 17 can be countersunk and fitted in the first sleeve 16. For said embodiment a pointed screw 28 is used for the purpose of keeping said second sleeve 17 positioned during manouvering of the lifting equipment.

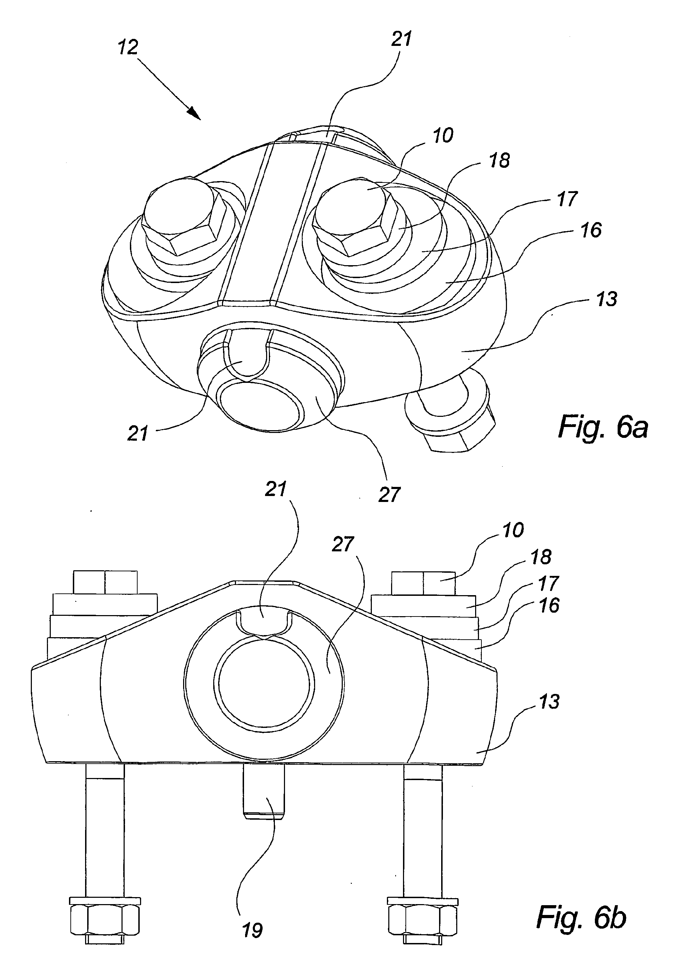

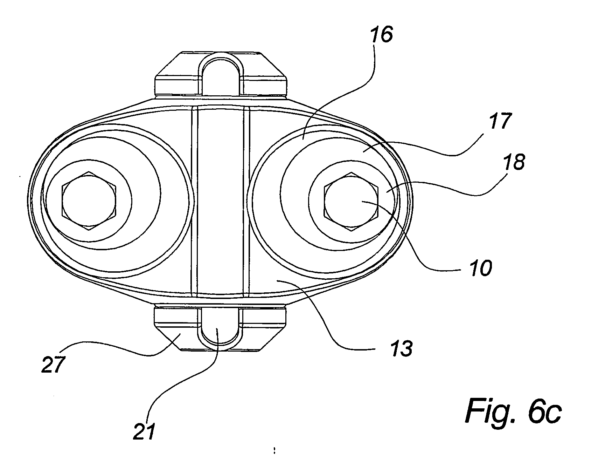

Fig. 6a, 6b and 6c illustrates different views of a preferred embodiment of the invented universal lifting tool.

As illustrated in fig. 6a for this preferred embodiment, the universal lifting tool 12 comprises a base plate 13 that constitute a base frame and an eyelet 21 for the attachment of tower lifting means.

Fig. 6a further illustrates that two connection points of this preferred embodiment 12 each comprises sleeves 16, 17 and a bush 18 located on top of each other.

This example of a preferred embodiment is to be attached to three attachment points e.g. 8 of a flange 7 of a wind turbine tower section 3.

A middle attachment point (not illustrated in fig. 6a) comprises a strut 19 fastened to the base plate 13. For various embodiments the strut can be replaced dependent on the diameter of the connection points 8 and can be e.g. 30 mm, 36 mm, 42 mm or 48 mm in diameter.

Further a first sleeve 16 is formed with a substantially circular hole 25 (not illustrated at fig. 6a.) dislocated from the centre point of said first sleeve 16. Said first sleeve 16 can rotate around its centre point as indicated by the dashed arrows.

A second sleeve 17 is also formed with a circular hole 26 (not illustrated on fig. 6a) into which the bush 18 fits. The centre of said hole 26 is dislocated from the centre point of said second sleeve 17. Said second sleeve can rotate around its centre point as indicated by the dashed arrows.

The diameter of said hole 25 in said first sleeve 16 exceeds the diameter of said hole 26 in said second sleeve 17.

By placing the first 16 and second 17 sleeve on the base plate 13 as illustrated in fig. 6a, and furthermore rotating them in relation to each other, it is possible to bring said hole 26 in the second sleeve 17 in position within the area of said hole 24 in the base plate 13 as desired with the positive result, that the distance ℓ and the angle α relative to the fixed attachment point embodied by the strut 19, can be changed to desired.

It is hereby achieved that one lifting equipment 12 can be adapted to the connection points 8 of any tower section 3 despite of the angle α and distance ℓ between the points 8.

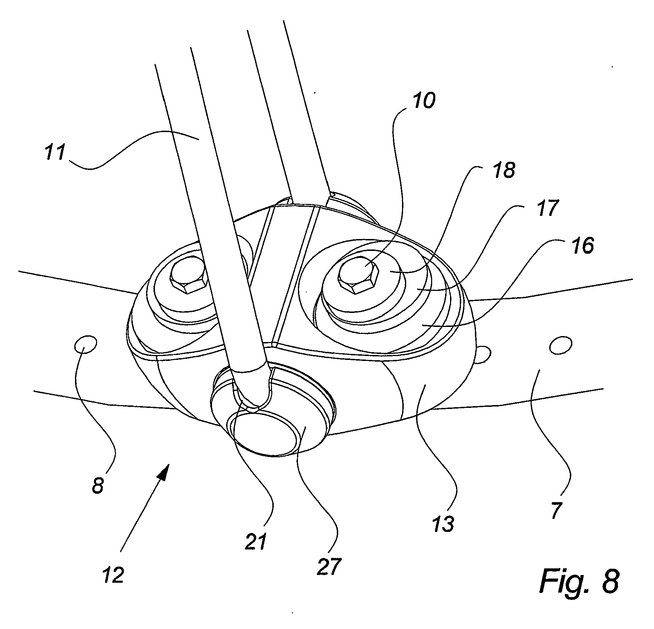

For one preferred embodiment the eyelet 21 is constructed in such a way that it penetrates the base plate 13 allowing tower lifting means comprising one or more lifting wires to be established through said eyelet 21. This is further illustrated in fig. 8.

The entrance/exit traces of the eyelet 21 are curved and angled as to minimize stress on the wires and the base plate 13.

For various preferred embodiments, portions of the entrance/exit traces of the eyelet 21 are rotatable parts 27 and can follow any variation in angulation that occur e.g. when a connected horizontal positioned tower segment is raised to vertical position.

Fig. 6b illustrates a first side view of a preferred embodiment of the invention comprising a strut 19.

Fig 6c illustrates a second view of a preferred embodiment of the invention.

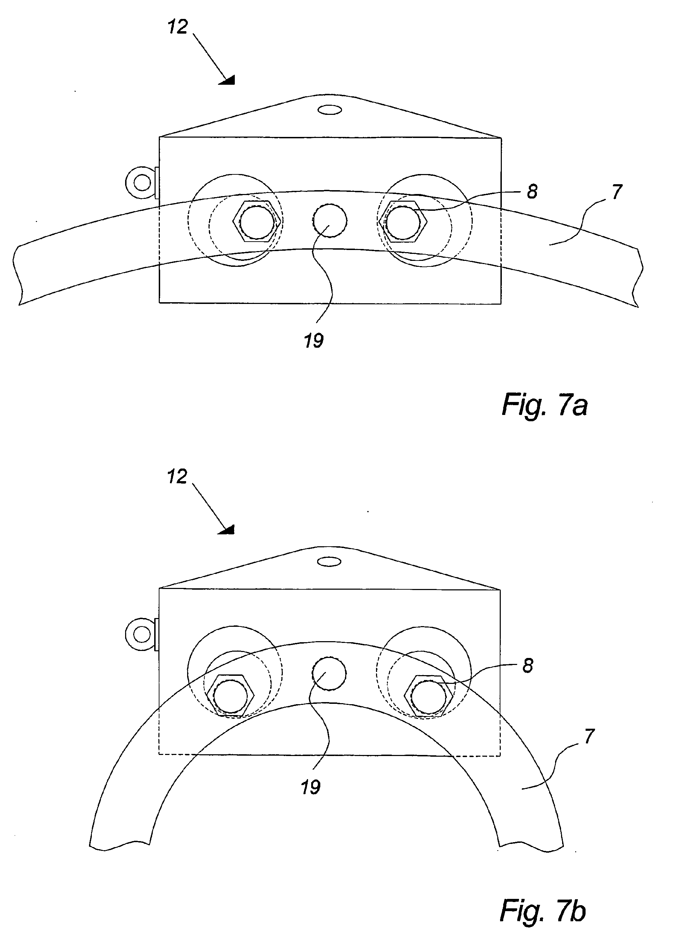

Fig. 7a and 7b illustrates schematically one embodiment of the invented universal lifting tool 12 attached to flanges 7 of wind turbine tower sections 3 with two different diameters.

Fig. 7a illustrates a prefered positioning of the two sleeves 16 and 17 for a flange 7 with a first radius r1.

Fig. 7b illustrates a prefered positioning of the two sleeves eccentrics 16 and 17 for a flange 7 with a second radius r2 (i.e. r1 > r2).

Fig. 8 illustrates schematically a preferred embodiment of the invented universal lifting tool 12 attached to flanges 7 of a wind turbine tower section 3 and with attached lifting wire 11.

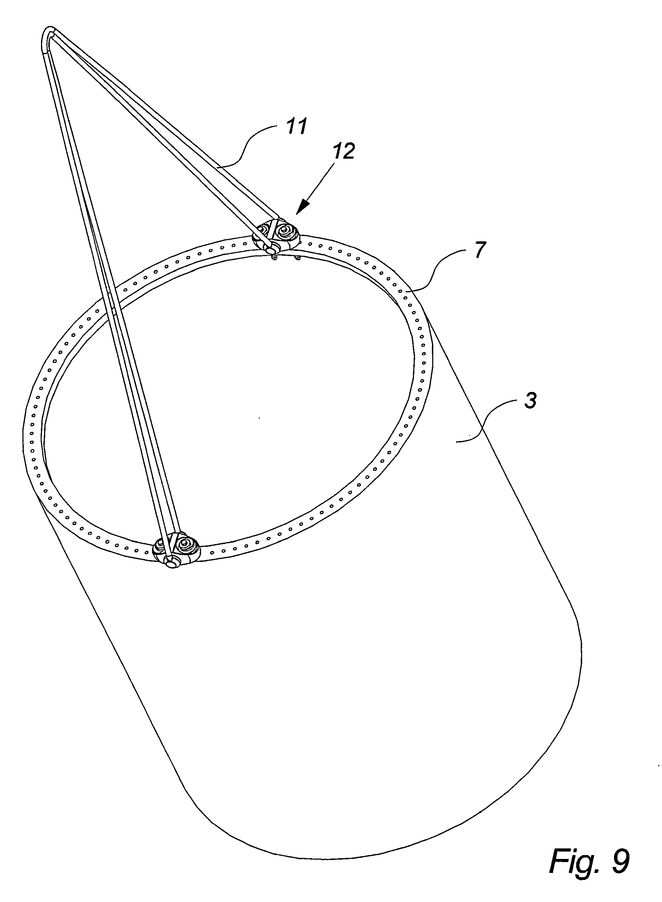

Fig. 9 illustrates schematically the invented universal lifting tools 12 attached to a wind turbine tower segment 3 when the segment is lifted to substantially vertical position.

### List

- 1.: Wind turbine
- 2.: Tower
- 3.: Tower segments
- 4.: Nacelle
- 5.: Rotor
- 6.: Blade
- 7.: Flange of a tower section
- 8.: Attachment point in flange
- 9.: Conventional lifting tool
- 10.: Clamping bolt
- 11.: Lifting wire
- 12.: Universal lifting tool
- 13.: Base plate
- 14.: Lifting plate
- 15.: Side plate
- 16.: First sleeve
- 17.: Second sleeve
- 18.: Bush
- 19.: Strut
- 20.: Screw
- 21.: Eyelet for tower lifting means
- 22.: Eyelet for tool lifting means
- 23.: Shackle
- 24.: Hole in base plate
- 25.: Hole in first sleeve
- 26.: Hole in second sleeve
- 27.: Rotatable part of eyelet
- 28.: Pointed screw
- r1: Radius of one tower section flange
- r2: Radius of a second tower section flange
- c1: Centre of first sleeve
- c2: Centre of second sleeve

- ℓ: Distance between attachment points
- α: Angle relative to horizontal

## Claims

1. Lifting equipment (12) for handling a wind turbine component (3) in connection with lifting means
said equipment (12) comprising
- a base frame (13, 14, 15) with at least one attachment area (21), and
- at least two attachment points (16a-18a, 16b-18b, 19) for said wind turbine component (3)
**characterized in that**
at least one of said attachment points (16a-18a, 16b-18b, 19) are adjustable mounted in order to perform an eccentric movement in relation to said base frame (13, 14, 15).

2. Lifting equipment (12) according to claim 1, wherein said wind turbine component (3) is a wind turbine tower segment.

3. Lifting equipment (12) according to claim 1 or 2, wherein at least one of said attachment points (16a-18a, 16b-18b, 19) comprises at least one sleeve (16a-17a, 16b-17b) with a through going hole (25, 26) which centre is dislocated from the centre of said sleeve (16a-17a, 16b-17b) in order to perform an eccentric movement within the area of a hole (24) in said base frame (13, 14, 15).

4. Lifting equipment (12) according to any of claims 1 to 3, wherein said base frame (13, 14, 15) comprises at least one through going hole (24), said through going hole (24) in base frame (13, 14, 15) being substantially larger than said hole (25, 26) in at least one sleeve (16a-17a, 16b-17b) e.g. at least twice the size of a hole in said at least one sleeve.

5. Lifting equipment (12) according to any of the preceding claims, wherein the number of sleeves (16a-17a, 16b-17b) is two, first and second sleeve, which are partly or totally integrated into each other or into the base frame (13, 14, 15) e.g. in depressed areas of the base frame and first sleeve, respectively.

6. Lifting equipment (12) according to any of the preceding claims, wherein said first sleeve (16) is located in a depressed area of said base frame (13, 14, 15) and a second sleeve (17) is located in a depressed area of said first sleeve (16) opposite to the base frame (13, 14, 15).

7. Lifting equipment (12) according to any of the preceding claims, wherein the eccentric movement between the holes (25, 26) in said two sleeves (16a-17a, 16b-17b) and the eccentric movement between the hole (25) in the first sleeve (16) and the hole (24) in the base frame (13, 14, 15) allows a double eccentric movement of the hole (26) in the second sleeve (17) in relation to the base frame (13, 14, 15).

8. Lifting equipment (12) according to any of the preceding claims, wherein said first sleeve (16) comprise a through going hole (25) with a diameter larger than the diameter of the hole (26) in said second sleeve (17) and said base frame (13, 14, 15) comprises a through going hole (24) with a diameter larger than the diameter of the hole (25) in said first sleeve (16).

9. Lifting equipment (12) according to claim 1, wherein at least a further attachment point comprises a mounted strut (19) in relation to the base frame (13, 14, 15).

10. Lifting equipment (12) according to claim 9, wherein said strut (19) in relation to the base frame (13, 14, 15) is replaceable e.g. to a strut with an other diameter and/or length and/or shape such as triangular or circular

11. Lifting equipment (12) according to claim 1, wherein the lifting equipment (12) comprises an area for handling, such as when fixing said lifting equipment (12) to a wind tower component (3).

12. Lifting equipment (12) according to claim 1, wherein said base frame (13, 14, 15) comprises an area for connecting said lifting means e.g. a hole (21) for attaching a crane wire and hook.

13. Lifting equipment (12) according to claim 12, wherein said area for connecting lifting means comprises rotatable parts (27).

14. A method for handling a wind turbine component (3), said method comprising steps of
- attaching lifting equipment (12) according to any of claims 1 to 13 to said wind turbine component (3) by performing an eccentric movement of at least one attachment points (16a-18a, 16b-18b, 19) included in the equipment,
- connecting lifting means to said lifting equipment (12), and
- handling the wind turbine component (3) to a desired position.

## Patentansprüche

1. Hebeausrüstung (12) zur Handhabung einer Windturbinenkomponente (3) in Verbindung mit einem Hebemittel, wobei die Ausrüstung (12) Folgendes umfasst:
- ein Basisgestell (13, 14, 15) mit wenigstens einem Befestigungsbereich (21), und
- wenigstens zwei Befestigungspunkte (16a-18a, 16b-18b, 19) für die Windturbinenkomponente (3),
**dadurch gekennzeichnet, dass**
wenigstens einer der Befestigungspunkte (16a-18a, 16b-18b, 19) einstellbar angebracht ist, um relativ zum Basisgestell (13, 14, 15) eine exzentrische Bewegung auszuführen.

2. Hebeausrüstung (12) nach Anspruch 1, wobei die Windturbinenkomponente (3) ein Turmsegment einer Windturbine ist.

3. Hebeausrüstung (12) nach Anspruch 1 oder 2, wobei wenigstens einer der Befestigungspunkte (16a-18a, 16b-18b, 19) wenigstens eine Buchse (16a-17a, 16b-17b) mit einem durchgehenden Loch (25, 26), dessen Mittelpunkt gegenüber dem Mittelpunkt der Buchse (16a-17a, 16b-17b) verschoben ist, umfasst, um im Bereich eines Lochs (24) im Basisgestell (13, 14, 15) eine exzentrische Bewegung auszuführen.

4. Hebeausrüstung (12) nach einem der Ansprüche 1 bis 3, wobei das Basisgestell (13, 14, 15) wenigstens ein durchgehendes Loch (24) umfasst, wobei das durchgehende Loch (24) im Basisgestell (13, 14, 15) wesentlich größer ist als das Loch (25, 26) in der wenigstens einen Buchse (16a-17a, 16b-17b), beispielsweise wenigstens von der doppelten Größe eines Lochs in der wenigstens einen Buchse.

5. Hebeausrüstung (12) nach einem der vorhergehenden Ansprüche, wobei die Zahl der Buchsen (16a-17a, 16b-17b) zwei beträgt, eine erste und eine zweite Buchse, die teilweise oder vollständig miteinander oder mit dem Basisgestellt (13, 14, 15) integriert sind, beispielsweise in vertieften Bereichen des Basisgestells bzw. der ersten Buchse.

6. Hebeausrüstung (12) nach einem der vorhergehenden Ansprüche, wobei die erste Buchse (16) in einem vertieften Bereich des Basisgestells (13, 14, 15) angeordnet ist und eine zweite Buchse (17) in einem vertieften Bereich der ersten Buchse (16), dem Basisgestell (13, 14, 15) gegenüberliegend, angeordnet ist.

7. Hebeausrüstung (12) nach einem der vorhergehenden Ansprüche, wobei die exzentrische Bewegung zwischen den Löchern (25, 26) in den beiden Buchsen (16a-17a, 16b-17b) und die exzentrische Bewegung zwischen dem Loch (25) in der ersten Buchse (16) und dem Loch (24) im Basisgestell (13, 14, 15) eine doppelt exzentrische Bewegung des Lochs (26) in der zweiten Buchse (17) relativ zum Basisgestell (13, 14, 15) gestattet.

8. Hebeausrüstung (12) nach einem der vorhergehenden Ansprüche, wobei die erste Buchse (16) ein durchgehendes Loch (25) umfasst, das einen Durchmesser hat, der größer ist als der Durchmesser des Lochs (26) in der zweiten Buchse (17) und das Basisgestell (13, 14, 15) ein durchgehendes Loch (24) umfasst, das einen Durchmesser hat, der größer ist als der Durchmesser des Lochs (25) in der ersten Buchse (16).

9. Hebeausrüstung (12) nach Anspruch 1, wobei wenigstens ein weiterer Befestigungspunkt einen in Bezug zum Basisgestell (13, 14, 15) montierten Stab (19) umfasst.

10. Hebeausrüstung (12) nach Anspruch 9, wobei der Stab (19) am Basisgestell (13, 14, 15) ausgetauscht werden kann, beispielsweise gegen einen Stab mit einem anderen Durchmesser und/oder einer anderen Länge und/oder Form, wie etwa einer dreieckigen oder kreisförmigen Form.

11. Hebeausrüstung (12) nach Anspruch 1, wobei die Hebeausrüstung (12) einen Bereich zur Handhabung umfasst, etwa für den Fall, dass die Hebeausrüstung (12) an einer Windturbinenkomponente (3) befestigt wird.

12. Hebeausrüstung (12) nach Anspruch 1, wobei das Basisgestell (13, 14, 15) einen Bereich zum Anbringen des Hebemittels umfasst, beispielsweise ein Loch (21) zum Befestigen eines Kranhakens und Drahtseils.

13. Hebeausrüstung (12) nach Anspruch 12, wobei der Bereich zum Anbringen des Hebemittels drehbare Teile (27) umfasst.

14. Verfahren zum Handhaben einer Windturbinenkomponente (3), wobei das Verfahren die folgenden Schritte umfasst:
- Befestigen einer Hebeausrüstung (12) nach einem der Ansprüche 1 bis 13 an der Windturbinenkomponente (3) durch das Ausführen einer exzentrischen Bewegung wenigstens eines in der Ausrüstung enthaltenen Befestigungspunkts (16a-18a, 16b-18b, 19),
- Ankuppeln eines Hebemittels an die Hebeausrüstung (12), und
- Bewegen der Windturbinenkomponente (3) zu einer gewünschten Position.

## Revendications

1. Equipement élévateur (12) conçu pour manipuler un composant (3) d'éolienne en association avec des moyens de levage,
ledit équipement (12) comprenant
- un bâti de base (13, 14, 15) muni d'au moins une zone de rattachement (21), et
- au moins deux points de fixation (16a-18a, 16b-18b, 19) dédiés audit composant (3) d'éolienne,
**caractérisé par le fait**
**qu'**au moins l'un desdits points de fixation (16a-18a, 16b-18b, 19) est monté de façon réglable, en vue d'accomplir un mouvement excentré par rapport audit bâti de base (13, 14, 15).

2. Equipement élévateur (12) selon la revendication 1, dans lequel ledit composant (3) d'éolienne est un segment de mât d'éolienne.

3. Equipement élévateur (12) selon la revendication 1 ou 2, dans lequel au moins l'un desdits points de fixation (16a-18a, 16b-18b, 19) comprend au moins un manchon (16a-17a, 16b-17b) percé d'un trou traversant (25, 26) dont le centre est décalé du centre dudit manchon (16a-17a, 16b-17b), de manière à accomplir un mouvement excentré à l'intérieur de la région d'un trou (24) pratiqué dans ledit bâti de base (13, 14, 15).

4. Equipement élévateur (12) selon l'une quelconque des revendications 1 à 3, dans lequel ledit bâti de base (13, 14, 15) comprend au moins un trou traversant (24), ledit trou traversant (24), pratiqué dans ledit bâti de base (13, 14, 15), étant sensiblement plus large que ledit trou (25, 26) pratiqué dans au moins un manchon (16a-17a, 16b-17b) et représente, par exemple, au moins le double du dimensionnement d'un trou pratiqué dans ledit manchon prévu au minimum.

5. Equipement élévateur (12) selon l'une quelconque des revendications précédentes, dans lequel les manchons (16a-17a, 16b-17b) sont au nombre de deux, des premier et second manchons qui sont intégrés, en partie ou en totalité, l'un dans l'autre ou dans le bâti de base (13, 14, 15), par exemple dans des renfoncements respectifs du bâti de base et du premier manchon.

6. Equipement élévateur (12) selon l'une quelconque des revendications précédentes, dans lequel ledit premier manchon (16) est logé dans un renfoncement dudit bâti de base (13, 14, 15), et un second manchon (17) est logé dans un renfoncement dudit premier manchon (16) qui est tourné à l'opposé du bâti de base (13, 14, 15).

7. Equipement élévateur (12) selon l'une quelconque des revendications précédentes, dans lequel le mouvement excentré entre les trous (25, 26) pratiqués dans les deux manchons (16a-17a, 16b-17b) précités, et le mouvement excentré entre le trou (25) pratiqué dans le premier manchon (16) et le trou (24) pratiqué dans le bâti de base (13, 14, 15), autorisent un double mouvement excentré du trou (26) pratiqué dans le second manchon (17), vis-à-vis du bâti de base (13, 14, 15).

8. Equipement élévateur (12) selon l'une quelconque des revendications précédentes, dans lequel ledit premier manchon (16) comprend un trou traversant (25) offrant un diamètre plus grand que le diamètre du trou (26) pratiqué dans ledit second manchon (17), et ledit bâti de base (13, 14, 15) comprend un trou traversant (24) présentant un diamètre plus grand que le diamètre du trou (25) pratiqué dans ledit premier manchon (16).

9. Equipement élévateur (12) selon la revendication 1, dans lequel au moins un point de fixation supplémentaire comprend un étai (19) associé au bâti de base (13, 14, 15).

10. Equipement élévateur (12) selon la revendication 9, dans lequel ledit étai (19), associé au bâti de base (13, 14, 15), peut par exemple être remplacé par un étai présentant un diamètre autre et/ou une longueur autre et/ou une forme autre, telle que triangulaire ou circulaire.

11. Equipement élévateur (12) selon la revendication 1, ledit équipement élévateur (12) comprenant une zone destinée à une manipulation, telle qu'une fixation dudit équipement élévateur (12) à un composant (3) d'éolienne.

12. Equipement élévateur (12) selon la revendication 1, dans lequel ledit bâti de base (13, 14, 15) comprend une zone de rattachement desdits moyens de levage, par exemple un trou (21) de rattachement d'un câble et d'un crochet de grue.

13. Equipement élévateur (12) selon la revendication 12, dans lequel ladite zone de rattachement de moyens de levage comprend des parties rotatives (27).

14. Procédé de manipulation d'un composant (3) d'éolienne, ledit procédé comprenant des étapes consistant à
- relieur, audit composant (3) d'éolienne, un équipement élévateur (12) conforme à l'une quelconque des revendications 1 à 13, par exécution d'un mouvement excentré d'au moins un point de fixation (16a-18a, 16b-18b, 19) inclus dans l'équipement,
- rattacher des moyens de levage audit équipement élévateur (12), et
- manipuler le composant (3) d'éolienne jusqu'à un emplacement souhaité.
